(19) Europäisches Patentamt
European Patent Office
Office européen des brevets

(11) Publication number: **0 627 451 A2**

# (12) EUROPEAN PATENT APPLICATION

(21) Application number: **94108376.8**

(22) Date of filing: **31.05.94**

(51) Int. Cl.$^5$: **C08G 18/30**, C08G 18/42, C09J 175/06

(30) Priority: **03.06.93 US 72333**

(43) Date of publication of application: **07.12.94 Bulletin 94/49**

(84) Designated Contracting States: **DE FR GB SE**

(71) Applicant: **MINNESOTA MINING AND MANUFACTURING COMPANY**
**3M Center,**
**P.O. Box 33427**
**St. Paul, Minnesota 55133-3427 (US)**

(72) Inventor: **Bankers, Gerald J., c/o Minnesota Min. Manuf.Comp.**
**2501 Hudson Road,**
**P.O. Box 33427,**
**St. Paul**
**Minnesota 55133-3427 (US)**
Inventor: **Frisch, Kurt C., Jr., Minnesota Min. Manuf.Comp.**
**2501 Hudson Road,**
**P.O. Box 33427,**
**St. Paul**
**Minnesota 55133-3427 (US)**

(74) Representative: **VOSSIUS & PARTNER**
**Siebertstrasse 4**
**D-81675 München (DE)**

## (54) Moisture curable, plasticized polyurethane adhesives.

(57) A moisture curable polyurethane adhesive composition comprises an aromatic polyisocyanate, a polyester polyol, a functionally effective amount of a plasticiser, and an optional polyether polyol. The aromatic polyisocyanate has an isocyanate functionality that does not exceed about 2.3. The polyester polyol may be derived from the reaction of adipic acid and a diol (e.g., neopentyl glycol, diethylene glycol, 2-methyl-1,3-propane diol, 2,3-methylbutane diol, or 1,2-propylene diol) or it may be provided by a polycaprolactone diol. The adhesive compositions are particularly useful in bonding vinyl to wood.

EP 0 627 451 A2

This invention relates generally to polyurethane adhesives and, more particularly, to moisture curable, plasticized polyurethane adhesives that demonstrate excellent adhesion to wood and vinyl.

Plastic clad wood laminates comprising a wood core with an outer plastic (e.g., polyvinyl chloride) sheath or surface are commonly used when concerns of durability, abrasion resistance, weatherability, aesthetics, cost and the like make the use of bare wood inappropriate or undesirable. Conventional articles utilizing a plastic clad wood core laminate include architectural members (for example, door frames, window frames and window sills), built-in furniture (for example, kitchen and bathroom cabinets and countertops), and free-standing articles of furniture (for example, desks, bookcases, tables, cabinets, etc.).

Typically, the plastic cladding is adhesively bonded to the wood core. Depending on the shape of the finished article, its intended use, and the environmental conditions to which the finished article will be exposed, exacting demands may be placed on the adhesive. Compound shapes and acute angles may place considerable stress on both the wood core and the plastic cladding as well as the adhesive that bonds them together. In addition, extruded plastics may retain residual stresses that, upon subsequent heating, are permitted to relax. The relaxation can be manifested in shrinkage of the plastic cladding. A useful adhesive should enable the extruded plastic to resist shrinkage.

The core and the plastic cladding may expand and contract at different rates in response to fluctuating temperatures. A useful adhesive should readily adapt to such temperature variations while maintaining adhesion between the core and the cladding.

U.S. Patent No. 5,057,568 "Polyurethane Adhesives," issued October 15, 1991 to J. Nowicki et al., proposes an adhesive which is reportedly useful in such constructions. The disclosed adhesive is a solvented composition comprising 20 to 40% by weight of a diphenylmethane diisocyanate, 0.5 to 4.0% by weight of a caprolactone triol, 40 to 75% by weight of a neopentyl adipate ester diol, 0 to 10% by weight of at least one polypropylene oxide diol, and a functionally effective amount of a catalyst.

Canadian Patent Application No. 2,039,305, published October 18, 1991 and entitled "Polyurethane Adhesive for PVC/Wood Laminating," discloses a heat resistant laminate material consisting essentially of a wood-containing substrate base member that is directly secured to a polyvinyl chloride film by a polyurethane adhesive. The polyurethane adhesive includes 30 to 36% by weight of a diphenylmethane diisocyanate, 13.5 to 19.5% by weight of an ethylene oxide capped polypropylene oxide diol, 32.5 to 41.5% by weight of a neopentyl adipate ester diol, 8 to 17% by weight of a hydroxyl terminated polybutadiene, 0.5 to 2.5% by weight diethyl malonate, and 0.035 to 0.050% by weight dibutyl tin dilaurate.

Polyurethane containing compositions are disclosed in other references. For example, U.S. Patent No. 3,210,439 issued October 5, 1965 to R. R. Aitken et al. discloses coating and adhesive compositions comprising vinyl chloride polymers, polyisocyanate modified polyesters based on aliphatic acids and diols, and optionally, nonreactive plasticizers. The compositions may be applied from solution, from a plastisol, or from an organosol.

U.S. Patent No. 4,758,648, "High Speed Cure Sealant," issued July 19, 1988 to S. D. Rizk et al. discloses a moisture curable sealant comprising a polyurethane prepolymer having an isocyanate functionality between 2.3 and 3.0, and from 0.2 to 1.75%( by weight of the sealant) of a dimorpholinodiethyl ether catalyst. A related composition is disclosed in U.S. Patent No. 4,780,520, "High Speed Cure Sealant," issued October 25, 1988 to S. D. Rizk et al.

U.S. Patent No. 5,004,794, "Isocyanate Prepolymers," issued April 2, 1991 to W. Emmerling et al. discloses an isocyanate prepolymer that is obtained from diisocyanates, triols, and polyethers and/or polyesters containing two hydroxyl groups in a two-step process. These materials reportedly provide the principal components of adhesive, coating and sealant compositions.

U. S. Patent No. 5,061,749, "One-Pack Type Heat Precurable Moisture-Curing Sealant Composition," issued October 29, 1991 to M. Ito et al. discloses a sealant composition comprising a urethane prepolymer based on a polyol and an aromatic polyisocyanate, a vinyl polymer containing a siloxy group, from 20 to 50% by weight (of the sealant) of a filler, and from 5 to 30% by weight (of the sealant) of a plasticizer.

In general, this invention relates to a moisture curable, plasticized polyurethane adhesive composition that is useful in bonding two dissimilar substrates, especially wood and vinyl. The adhesive composition comprises and, more preferably consists essentially of, an aromatic polyisocyanate, a polyester polyol, and a functionally effective amount of a plasticizer. Typically, the aromatic polyisocyanate displays an isocyanate functionality that does not exceed about 2.3 and which, more typically, is about 2.0 to 2.3.

The most preferred aromatic polyisocyanates are diphenylmethane diisocyanates, especially diphenyl methane 4,4'-diisocyanate.

The polyester polyol is typically an essentially amorphous material having a number average molecular weight of about 300 to 2500 (more preferably, about 500 to 1,000) with a hydroxyl number of about 110 to 220. The polyester polyol is the reaction product of adipic acid and a diol selected from the group

consisting of neopentyl glycol, diethylene glycol, 2-methyl-1,3-propane diol, 2,3-methylbutane diol, 1,2-propylene glycol, and blends thereof. The polyester polyol may also be a polycaprolactone diol. Particularly preferred polyester polyols for use in the adhesive compositions of the invention include neopentyl glycol adipate, ethylene glycol adipate, 2,3-methylbutane diol adipate, polycaprolactone diol, and blends thereof.

Preferably, the plasticizer is a nonreactive, low viscosity liquid at room temperature that is also compatible with the other components of the adhesive composition. The plasticizer may be selected from phthalate esters, adipate esters, sebacate esters, glutarate esters, oleate esters, alkyl phosphates, aryl phosphates, and blends thereof. While the plasticizer may provide from 2 to 20% by weight (based on the sum of the aromatic polyisocyanate, the polyester polyol, and any polyether polyol), an amount in the range of about 3 to 19%, even more preferably about 3 to 10%, is more useful. The plasticizer functions to reduce the viscosity of the adhesive composition, thereby providing enhanced substrate wet-out to promote the formation of stronger adhesive bonds.

Optionally, though quite desirably, the adhesive compositions of the invention may further comprise a polyether polyol, which may be advantageously selected from polyethylene oxides, polyproplyene oxides, polybutylene oxides, and copolymers of any of these materials. Polypropylene oxide diols and triols are particularly preferred.

The relative amounts of the aromatic polyisocyanate, the polyester polyol, and any polyether polyol are determined with reference to the ratio of the number of isocyanate groups to the number of hydroxyl groups (sometimes referred to hereinafter as the isocyanate index) which typically is in the range of about 1.8 to 3.0, more preferably about 2.0 to 2.8, and most preferably about 2.2 to 2.7. For those adhesive compositions that include a polyether polyol, the polyether polyol may selectively replace up to about 90% of the polyester polyol so long as the resulting isocyanate index falls within the above stated ranges.

The adhesive compositions of the invention may optionally include a catalyst for accelerating the moisture curing reaction. The catalyst typically comprises no more than 0.18% of the adhesive composition, although it more preferably comprises less than about 0.02%.

Another preferred, although optional, ingredient of the adhesive compositions of the invention is a surfactant, such as silane material.

The adhesive compositions of the invention are solvent free, 100% solids systems. That is, they contain less than about 1% solvent.

In general, this invention relates to moisture curable polyurethane adhesive compositions that are useful in bonding two dissimilar substrates. The adhesive compositions of the invention are particularly useful in bonding vinyl (e.g., polyvinyl chloride) to wood. In a broad aspect of the invention, the adhesive compositions comprise and, more preferably consist essentially of, an aromatic polyisocyanate, a polyester polyol, and a plasticizer. Optionally, though quite desirably, a portion of the polyester polyol may be replaced by a polyether polyol. Other optional, although highly desired, ingredients include a catalyst for accelerating the moisture curing reaction and a surfactant. Advantageously, the adhesive compositions of the invention are one-part systems that do not require separate mixing of individual components shortly before use as must be done when working with so-called two-part adhesives. Furthermore, the adhesive compositions are solvent free. That is, the finished adhesive composition contains less than 1% by weight of a solvent.

Useful aromatic polyisocyanates that may be used in the adhesive compositions of the invention include diphenylmethane diisocyanate (MDI) compounds, including its isomers, carbodiimide modified MDI, diphenylmethane 4,4'-diisocyanate, diphenylmethane 2,2'-diisocyanate, diphenylmethane 2,4'-diisocyanate, oligomeric methylene isocyanates of the following formula:

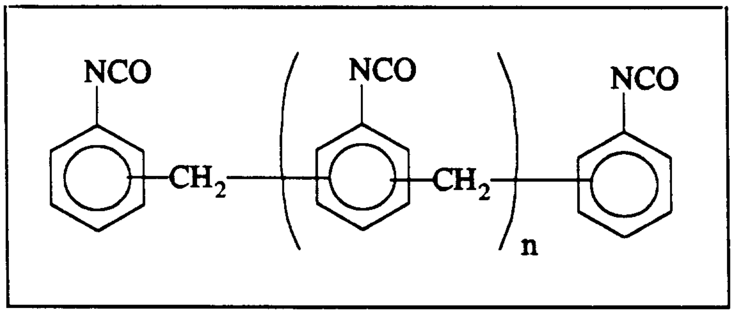

wherein n is an integer of 0 to 5, and mixtures thereof. Also useful, though less preferred, are toluene diisocyanate compounds, including isomers thereof.

Preferably, the aromatic polyisocyanate is diphenylmethane 4,4'-diisocyanate, although up to about 60% or more of this material may be replaced with diphenylmethane 2,4'-diisocyanate. Preferably, any carbodiimide modified MDI component that is included, does not exceed about 15% by weight of the aromatic polyisocyanate. Preferably, the aromatic polyisocyanates have an isocyanate functionality that does not exceed about 2.3 (more preferably about 2.0 to less than 2.3) so as to prevent a significant loss of adhesive properties.

Examples of suitable, commercially available aromatic polyisocyanates include the MONDUR series of MDI's (available from Miles Inc.) such as MONDUR M and MONDUR XP-744.

Polyester polyols useful in forming the adhesive compositions of the invention are preferably essentially amorphous. By "essentially amorphous" it is meant that the polyester polyol displays a glass transition temperature but does not exhibit a crystalline melting point as measured by differential scanning calorimetry (DSC) or, if the polyester polyol does display a crystalline melting point by DSC, then the crystallinity is not manifested in the polyurethane prepolymer obtained from the reaction of the aromatic polyisocyanate and the polyester polyol. Thus, the resulting polyurethane prepolymer displays a glass transition temperature without exhibiting a crystalline melting point by DSC.

The polyester polyol may be linear or slightly branched and preferably is a relatively low molecular weight material having a number average molecular weight of about 300 to 2500, more preferably about 500 to 1000. Furthermore, the polyester polyols useful in the invention preferably have a hydroxyl number of about 55 to 220. Molecular weights outside these ranges tend to increase the viscosity of the ultimate adhesive, thereby making it more difficult to apply. Moreover, larger hydroxyl numbers and lower molecular weights tend to create stiffer adhesives, which may be less desirable in applications where flexibility is important.

The polyester polyol is derived from the reaction of adipic acid and a diol. Useful diols with which the adipic acid may be reacted include neopentyl glycol, diethylene glycol, 2-methyl-1,3-propane diol, 2,3-methylbutane diol, 1,2-propylene glycol, and blends thereof. Not all of the possible diacid and diol combinations are necessarily of equal utility. Adhesive compositions which gel or which demonstrate principally adhesive failure when evaluated according to the test methods described more fully hereinbelow would be less useful. A very small amount of phosphoric acid may be helpful in counteracting the negative effects of any residual catalyst from the polyester polyol formation reaction.

Especially preferred polyester polyols for use in the adhesive compositions of the invention include neopentyl glycol adipate esters having a hydroxyl number of about 110 to 210 and ethylene glycol adipate esters having a hydroxyl number of about 110 to 210. Also considered useful are polycaprolactone polyester diols that form liquid prepolymers at room temperature.

Blends of different polyester polyols derived from the components mentioned above may be used so long as the adhesive properties of the resulting composition are not adversely affected. For example, a polyester polyol comprising equal molar amounts of diethylene glycol adipate ester and 2,3-methylbutane diol adipate ester having a hydroxyl number of about 110 may be used.

Examples of suitable, commercially available polyester polyols useful in the adhesive compositions of the invention include the RUCOFLEX series of materials from Ruco Polymer Corp. including RUCOFLEX S-107-210, a neopentyl glycol adipate polyester having a number average molecular weight of about 500 and a hydroxyl number of 210, RUCOFLEX S-107-110, a neopentyl glycol adipate polyester having a number average molecular weight of about 1000 and a hydroxyl number of 110, RUCOFLEX S-1011-120, an ethylene glycol adipate polyester having a number average molecular weight of about 935 and a hydroxyl number of 120, RUCOFLEX S-1011-210, an ethylene glycol adipate polyester having a number average molecular weight of about 935 and a hydroxyl number of 210, RUCOFLEX S-1040P-110, a polyester polyol comprising equal molar amounts of ethylene glycol adipate polyester and 2,3-methylbutane diol adipate polyester having a number average molecular weight of about 1000 and a hydroxyl number of 110. An example of a polycaprolactone polyester diol useful in the adhesive compositions of the invention is TONE 0201, commercially available from Union Carbide Corp.

The plasticizer is an important component of the adhesive compositions of the invention. The plasticizer reduces the viscosity of the adhesive composition, enhances its flexibility, and improves adhesive wet-out, thereby promoting superior adhesion. Preferably, the plasticizers used in the adhesive compositions of the invention are low viscosity liquids at room temperature (i.e., 20 to 22 °C). The plasticizer should be nonreactive; that is, the plasticizer should not react with other components of the adhesive, especially the aromatic polyisocyanate. However, nonreactivity is not an essential requirement. Also, the plasticizer should be compatible with the other components of the adhesive. By "compatible" it is meant that there should be

no visible gross phase separation of the adhesive components upon mixing or after application. Compatibility with the substrates bonded by the adhesive is also desirable for promoting strong adhesive bonds.

Useful plasticizers for the adhesive compositions of the invention are provided by nonvolatile organic liquids that enable the plasticizer to remain a part of the adhesive matrix. Such plasticizers include phthalate, adipate and sebacate esters, and derivatives of polyols such as ethylene glycol, castor oil, etc. More specific examples of useful plasticisers include dibutyl phthalate, dioctyl phthalate, 2-ethylhexyl phthalate, dicyclohexyl phthalate, diisooctyl phthalate, diisodecyl phthalate, dibenzyl phthalate, butyl benzyl phthalate, trioctyl phosphate, tricresol phosphate, epoxy resin plasticizers, toluenesulfonamide, chloroparaffin, and sulfonic acid esters.

Examples of suitable, commercially available plasticizers include the PLASTHALL series available from C. P. Hall Co. such as DOP (bis(2-ethylhexyl) phthalate), DIDP (diisodecyl phthalate), DIDG (diisodecyl glutarate), 325 (butoxyethyl oleate), and 226S (dibutoxyethoxyethyl adipate); the SANTICIZER series of materials available from Monsanto Chemical Co. such as C-148 (isodecyl diphenylphosphate), C-160 (butylbenzyl phthalate), C-261 (alkylbenzyl phthalate); HB-40 (hydrogenated terphenyl) available from Monsanto; and DIOCTYL ADIPATE available from Monsanto.

The amount of plasticizer which may be incorporated into the adhesive compositions of the invention is determined in part by the structure of the polyester polyol, the physical properties desired in the ultimate adhesive composition, and the levels of other components in the adhesive composition. In general, the amount of plasticizer is determined by balancing the properties of viscosity, adhesion and flexibility demonstrated by the ultimate adhesive. As the amount of plasticizer increases, the viscosity of the ultimate adhesive declines, thereby promoting better substrate wet-out and improved adhesion but with a consequent loss of internal (i.e., cohesive) strength.

Typically, it is desirable to use the minimum amount of plasticizer necessary to achieve the desired properties. As a rule of thumb, the minimum amount of plasticizer necessary to permit a bonded sample to suffer substrate failure, cohesive failure of the adhesive, or both (as opposed to suffering adhesive failure) when evaluated according to the test methods described more fully hereinbelow is used. The minimum amount of plasticizer needed to achieve these functional levels of performance may be regarded as providing at least an effective amount of or as providing at least a functionally effective amount of plasticizer.

If the flexibility of the ultimate adhesive composition is pertinent, the amount of plasticizer may be partially determined by this factor. The plasticizer provides enhanced flexibility. Consequently, as the molecular weight or the inherent flexibility of the polyester polyol (or the optional polyether polyol discussed below) increases, less plasticizer may be needed. On the other hand, as the glass transition temperature of the polyester polyol increases, greater amounts of plasticizer may be needed.

Within these broad parameters, at least about 2% plasticizer (based on the weight of the aromatic polyisocyanate, the polyester polyol and any polyether polyol) is considered necessary, although up to about 20% of the adhesive composition may be provided by the plasticiser. However, since it is desirable to minimize the amount of plasticizer, a plasticizer content of about 3 to 19%, more preferably about 3 to 10%, is more advantageously used. Plasticizers based on dibutoxyethoxy adipate, dioctyl adipate, diisodecyl phthalate and butylbenzyl phthalate give good performance.

Optional, though highly desirable, components of the adhesive compositions of the invention include polyether polyols, catalysts, and surfactants.

A portion of the polyester polyol may be selectively replaced by a polyether polyol, which has the beneficial effect of reducing both the viscosity and the cost of the adhesive composition. The polyether polyol may have a molecular weight of about 1000 to 8000 and, more preferably, about 2000 to 6000. Lower molecular weight polyether polyols tend to result in stronger adhesive bonds. Such polyether polyols may be obtained by the ring-opening polymerization of ethylene oxide, propylene oxide or butylene oxide in the presence of one or more low molecular weight compounds containing active hydrogen.

Useful low molecular weight active hydrogen-containing compounds that may be used in the ring-opening polymerization include diols (e.g., dipropylene glycol, diethylene glycol, and tripropylene glycol), triols (e.g., glycerine and trimethylol propane), tetrols (e.g., pentaerythritol), polyfunctional hydroxyl-containing materials (e.g., sucrose), and diamines (e.g., ethylene diamine and piperizene).

The preferred polyether polyols are obtained from the polymerization of polypropylene oxide diols and, even more preferably, polyproplyene oxide triols. The polypropylene oxide may occur in a random copolymer also containing ethylene oxide and/or butylene oxide segments as well as in a block copolymer in which the polypropylene oxide is endcapped with ethylene oxide units.

Examples of suitable, commercially available polyether polyols include the ARCOL series of materials from ARCO Chemical Co. such as PPG-1025 (a polypropylene oxide diol having a molecular weight of

about 1,000), PPG-3025 (a polypropylene oxide diol having a molecular weight of about 3,000), PPG-4025 HF (a high functionality polypropylene oxide diol having a molecular weight of about 4,000), LHT-28 (a polypropylene oxide triol having a molecular weight of about 6,000), E-351 (an ethylene oxide capped polypropylene oxide diol having a molecular weight of about 2,800), and E-2306 (a polypropylene oxide triol having a molecular weight of about 6,000); the VORANOL series of materials from Dow Chemical Co. such as 4701 (an ethylene oxide capped polypropylene oxide triol having a molecular weight of about 5200) and 5815 (an ethylene oxide capped polypropylene oxide triol having a molecular weight of about 6,000); and PLURACOL C-133, a styrene/acrylonitrile dispersion in an ethylene oxide capped polypropylene oxide triol having a molecular weight of about 4,700 (available from BASF Corp.).

The polyether polyol may selectively replace up to about 90% of the polyester polyol. As the relative amount of the polyether polyol increases, the flexibility of the ultimate adhesive composition also increases, but with a consequent loss of cohesive strength. As a result, as the amount of polyether polyol increases, it may be possible to use less plasticizer.

The aromatic polyisocyanate, polyester polyol and any polyether polyol are blended so as to provide an appropriate isocyanate group-to-hydroxyl group ratio (isocyanate index). Thus, the relative amounts of these components are determined by the isocyanate index. If the aromatic polyisocyanate is a liquid at room temperature, the isocyanate index should be greater than 1.8, preferably greater than 2.0. If the polyisocyanate is a room temperature solid, the isocyanate index should be in the range of about 1.8 to 3.0, more preferably about 2.0 to 2.8, and even more preferably about 2.2 to 2.7. The viscosity of the ultimate adhesive composition is related to the isocyanate index. The viscosity of the adhesive composition should be such that it permits the adhesive to be readily handled and applied as a viscous liquid at room temperature. A Brookfield viscosity of less than about 200,000 centipoise (cps) at room temperature is desirable, although a viscosity of less than about 100,000 cps is more desirable.

A catalyst may be desirably incorporated into the adhesive compositions of the invention to accelerate the moisture curing reaction. The stannous salts of carboxylic acids, such as stannous octoate, stannous oleate, stannous acetate, and stannous laurate may be used. Also useful are dialkyltin dicarboxylates such as dibutyltin dilaurate and dibutyltin diacetate. Various tertiary amines such as bis-morpholine, triethylene diamine, and bis-dimethylaminoethylether may be used too. Examples of suitable, commercially available catalysts include the TEXACAT series from Texaco Chemical Company including TEXACAT DMDEE, NEM, and NMM. Blends of different catalysts may also be used.

The catalyst is optional; the adhesive compositions will cure in their absence, although the curing reaction proceeds slowly. The catalyst accelerates the curing reaction enabling the adhesive composition to "set up" more quickly (i.e., the time until the bonded components can be handled without clamps is decreased) but with increased foaming and a decreased "open time" (i.e., the time during which a bond may be usefully made after the adhesive has been applied). Usually, the amount of catalyst is selected so as to balance the open time and the set time of the adhesive composition. Within these broad parameters, the amount of catalyst may range from 0% to about 0.18% (based on the weight of the aromatic polyisocyanate, the polyester polyol, and any polyether polyol), although at amounts above about 0.15%, the adhesive composition sets up very quickly. Consequently, catalyst amounts in the range of about 0.002 to 0.02% are preferred, with an amount of about 0.004% even more preferred.

Another optional though quite desirable component of the adhesive compositions of the invention is a surfactant which may function as a foam control agent by reducing foam cell size, thereby promoting superior adhesion. Useful surfactants include fluorochemicals, acetylenic alcohols, and, most preferably, silanes, such as vinyl silanes, mercaptosilanes, and aminosilanes. Useful, commercially available silanes include A-171, A-189, and A-1110 (from Union Carbide Corp.). An acetylenic alcohol is SURFYNOL from Air Products and Chemicals, Inc. The surfactant is typically provided in an amount of 0.1% or less, although amounts of about 0.06% or less are more preferred.

Up to about 50% by weight of the adhesive composition may be provided by various additives, adjuvants and the like so long as the adhesive composition does not suffer a significant loss of cohesive strength and so long as the adhesive properties are not materially adversely affected. Useful additives and adjuvants include dry fillers (e.g., calcium carbonate, silica, talc, glass beads, glass bubbles, fibers and zeolites), colorants, soluble dyes, thixotropes (e.g., fused silica, clay, talc, bentonite), tackifiers, pigments (e.g., titanium dioxide or carbon black), and stabilizers (e.g., ethyl acetoacetate, isophorone, and dialkyl malonates such as dimethyl malonate, diethyl malonate, methylethyl malonate, etc.).

The adhesive compositions of the invention may be prepared by blending the various ingredients in a suitable reaction vessel and stirring with heat under a dry nitrogen atmosphere until well blended. The ingredients may be added at the same time or sequentially. In the case of sequential addition, it is conventional to first add the aromatic polyisocyanate followed by the polyester polyol and the polyether

polyol (if any). Next added may be the catalyst, if present, followed by the plasticizer, the optional surfactant, and any other additives, adjuvants and the like. After the ingredients have been thoroughly blended, they may be transferred to nitrogen-evacuated receptacles such as drums, pails and cartridges.

The adhesive compositions may be applied to a suitable substrate by spraying, hand caulking, coating, or by pumping to an appropriate applicator device. Although the adhesive compositions of the invention are particularly useful in bonding vinyl (e.g., polyvinyl chloride) to wood, other substrates which may be bonded with the adhesive compositions include primed metal, primed glass, polymers, certain ceramics, textiles, paper, and certain rubbers. Typically, once the adhesive composition has been applied to the first substrate, the adhesive displays an open time on the order of about one hour. That is, for a period of about one hour, the second substrate may be mated to the first substrate. The actual open time will vary depending on the concentration of any catalysts as well as the temperature at which the adhesive composition was applied. Although the adhesive compositions of the invention may be readily applied to a substrate at room temperature (about 20 to 22°C), they may also be applied at higher temperatures. Once the adhesive composition has been applied, it begins to cure (i.e., crosslink) upon reaction with ambient moisture, eventually becoming a thermoset material. Conditions of elevated temperature and humidity accelerate the cure. It may be appropriate to clamp or otherwise mechanically secure the bonded components for a period of time until the adhesive has sufficiently set up (i.e., the bonded components can be handled without clamps, etc.). Good handling strength (i.e., adhesive set up) may be achieved in about 24 hours under ambient conditions or, with an application of heat, may be reached in as little as about 2 to 4 hours, or even less.

The invention will be more fully appreciated with reference to the following non-limiting examples in which all parts refer to parts by weight unless stated otherwise.

**General Preparation**

A stirred, heated reaction vessel equipped with a dry nitrogen purge and an addition port was constructed. The aromatic polyisocyanate was added to the reaction vessel and heated to 60°C with stirring. The polyester polyol along with any polyether polyol and catalyst were then added, with stirring, to the polyisocyanate over a period of about 15 minutes. After the resulting exotherm had subsided, the temperature was increased to 80°C and maintained for about 3 hours. The reaction product was then cooled to room temperature and the plasticizer and any surfactant were added with stirring. After the various ingredients had been thoroughly blended, the resulting adhesive composition was transferred to an epoxy-lined metal container that had been flushed with dry nitrogen. As explained more fully below, the various adhesive compositions were then evaluated for properties such as peel adhesion, overlap shear strength and viscosity using the following test procedures.

**Test Procedures**

Peel Adhesion

Bonded samples for the peel adhesion test comprised unplasticized hard vinyl (polyvinyl chloride) adhesively bonded to pine. The samples were prepared by cutting 2.54 cm by 35.5 cm (centimeter) strips from a 0.1 cm thick conventional, unplasticized, hard vinyl sheet. The pine was cut into 2.54 cm by 30.5 cm pieces. The vinyl strips were wiped with isopropyl alcohol and the wood was wiped free of sawdust prior to bonding. Adhesive was spread onto 22.9 cm of the vinyl strip (allowing for a 7.6 cm uncoated overhang on one end) using a wooden spatula to form a continuous coating approximately 0.08 cm thick. A few glass beads approximately 0.013 cm in diameter were sprinkled into the bond line to control the thickness of the bond. The vinyl strip containing adhesive was then placed adhesive side down on the pine substrate with the 7.6 cm uncoated overhang on one end to facilitate testing. Three bonded samples were prepared and aged at 20°C and 50% relative humidity for seven days. The three samples were arranged in a single layer underneath a 6.4 kg (kilogram) steel plate for the seven day aging period.

Samples, once prepared as described above, were tested using the apparatus set up shown in the Floating Roller Peel Test, ASTM-D 3167, on a Sintech Model 10 tensile tester using a separation rate of 5 cm/minute. The data were recorded in pounds per inch, and mathematically converted to Newtons/meter (N/m), and rounded to the nearest whole number. The reported figures are an average of the 5 samples. Preferably, the peel adhesion is at least 2460 N/m, more preferably at least 3070 N/m, and is a measure of the adhesion between the vinyl and the pine. The failure mode (discussed below) was also noted.

Overlap Shear Strength

Bonded samples for the overlap shear strength test comprised conventional, unplasticized, hard vinyl (polyvinyl chloride) adhesively bonded to pine. The samples were prepared by cutting 2.54 cm by 10.16 cm by 0.1 cm thick strips of hard, unplasticized vinyl, and 2.54 cm by 10.16 cm by 0.635 cm thick strips of pine. The vinyl strips were wiped with isopropyl alcohol and the wood strips were wiped free of sawdust prior to bonding. Adhesive was spread approximately 0.08 cm thick onto the last 1.27 cm of the vinyl strip using a wooden spatula. A few glass beads approximately 0.013 cm in diameter were added to the adhesive to control the thickness of the bond. The vinyl strip was placed adhesive side down on the end of the pine strip. The bonded area measured 1.27 cm by 2.54 cm. Three samples were prepared. The bonded samples were then aged at 20 °C and 50% relative humidity for seven days. During aging, the bonded samples were arranged in a single layer underneath a 6.4 kg steel plate with wood spacers between the unbonded portions of adjacent vinyl strips.

The overlap shear test was conducted at a separation rate of 5.08 cm/minute on a Sintech Model 10 tensile tester. The results were recorded in pounds per square inch and mathematically converted to megaPascals (MPa). (Data reported to three places following the decimal.) Preferably, the overlap shear strength is at least 1.0 MPa, more preferably at least 1.5 MPa and is a measure of the cohesive strength of the adhesive composition. The reported data are an average of the 3 samples. The failure mode was also noted.

Viscosity

Viscosity in centipoise (cps) was measured at room temperature (about 20 to 22 °C) using a Brookfield RTV, #6 spindle, at speeds from 0.5 to 20 rpm (revolutions per minute) depending on the viscosity of the adhesive. Lower viscosity tends to promote better substrate wet-out. Typically, the viscosity of the adhesive composition at room temperature should be less than about 200,000 cps, more less than preferably about 100,000 cps. Data are reported to the nearest 250 cps.

Failure Mode

The failure mode of the bonded samples evaluated in the peel adhesion and overlap shear strength tests was also noted. The failure mode is described herein through a system of abbreviations. "AF" refers to adhesive failure, "SF" refers to substrate failure, and "COH" refers to cohesive failure. "W" refers to wood and "V" refers to vinyl. Thus, SF-W indicates that the bond suffered substrate failure of the wood and COH indicates that the bond failed cohesively. A description such as 80/20% SF-W/COH designates a mixed failure mode in which 80% of the failure was substrate failure of the wood and 20% of the failure was cohesive. The reported data are an average of the multiple samples evaluated in the peel adhesion and overlap shear strength tests. The results are necessarily somewhat qualitative.

Commercial trade designations used to describe the components of the adhesive compositions reported in the following examples may be defined according to the schedule below. The stated molecular weights and hydroxyl numbers are approximate.

| Commercial Designation | Component | Description | Source |
|---|---|---|---|
| ARCOL E-2306 | Polyether polyol | Polypropylene oxide triol, molecular weight of 6000 | ARCO Chemical |
| ARCOL E-351 | Polyether polyol | Ethylene oxide capped polypropylene oxide diol, molecular weight of 2800 | ARCO Chemical |
| DIOCTYL ADIPATE | Plasticizer | Dioctyl adipate | Monsanto Chemical |
| HB-40 | Plasticizer | Hydrogenated terphenyl | Monsanto Chemical |
| MONDUR M | Aromatic poly-isocyanate | 4,4'-Methylene(diphenyl) isocyanate | Miles, Inc. |
| PLASTHALL 226S | Plasticizer | Dibutoxyethoxyethyl adipate | C.P. Hall |
| PLASTHALL 325 | Plasticizer | Butoxyethyl oleate | C. P.Hall |
| PLASTHALL DIDG | Plasticizer | Diisodecyl glutarate | C.P. Hall |
| PLASTHALL DIDP | Plasticizer | Diisodecyl phthalate | C.P. Hall |
| PLASTHALL DOP | Plasticizer | Bis(2-ethylhexyl) phthalate | C.P. Hall |
| PLURACOL C-133 | Polyether polyol | Styrene/acrylo-nitrile grafted ethylene oxide capped polypropylene oxide triol, molecular weight of 4700 | BASF Corp. |
| RUCOFLEX S-107-110 | Polyester polyol | Poly(neopentyl glycol adipate), molecular weight of 1000, hydroxyl number of 110 | Ruco Polymer Corp. |
| RUCOFLEX S-107-210 | Polyester polyol | Poly(neopentyl glycol adipate), molecular weight of 500, hydroxyl number of 210 | Ruco Polymer Corp. |
| SANTICIZER C-148 | Plasticizer | Isodecyl diphenylphosphate | Monsanto Chemical |
| SANTICIZER C-160 | Plasticizer | Butylbenzyl phthalate | Monsanto Chemical |

| | | | |
|---|---|---|---|
| SANTICIZER C-261 | Plasticizer | Alkylbenzyl phthalate | Monsanto Chemical |
| SILANE A-171 | Surfactant | Vinyl trimethoxysilane | Union Carbide Corp. |
| TEXACAT DMDEE | Catalyst | Bis(morpholino-diethyl) ether | Texaco Chemicals |
| TONE 0201 | Polyester polyol | Polycaprolactone, molecular weight of 512, hydroxyl number of 219 | Union Carbide Corp. |
| VORANOL 5815 | Polyether polyol | Ethylene oxide capped polypropylene oxide triol, molecular weight of 6000 | Dow Chemical Co. |

**Examples 1 to 5**

Examples 1 to 5 illustrate the effect of increasing amounts of plasticizer on the performance of adhesive compositions made in accordance with the invention. More specifically, five adhesive formulations were prepared following the general preparation described above. Each example included 21.6 parts MONDUR M (MDI), 7.8 parts RUCOFLEX S-107-210 polyester polyol, 70.5 parts ARCOL E-2306 polyether polyol, 0.002 part TEXACAT DMDEE catalyst, and 0.04 part SILANE A-171 surfactant. This blend provided the adhesive formulation for example 1. The "amount of plasticizer" shown in Table 1 below refers to the number of parts of SANTICIZER C-160 plasticizer that were added to 100 parts of the adhesive formulation of example 1. The isocyanate index for each example was 2.59. Each example was then tested for peel adhesion and overlap shear strength, the failure mode for each example also being noted. The results are reported below in Table 1.

TABLE 1

| Example | Amount of Plasticize r | Peel Adhesion (N/m) | Failure Mode | Overlap Shear Strength (MPa) | Failure Mode |
|---|---|---|---|---|---|
| 1 | 0 | 2012 | 67/33 % AF-V/COH | 1.849 | 33/67 % AF-V/COH |
| 2 | 0.5 | 2345 | 75/25 % AF-V/COH0 | 0.961 | 83/17 % AF-V/COH |
| 3 | 1.0 | 1942 | 88/12 % AF-V/COH | 0.773 | 100 % AF-V |
| 4 | 2.0 | 2292 | 42/58 % AF-V/COH | 2.125 | 58/42 % AF-V/COH |
| 5 | 3.0 | 2800 | 100 % COH | 1.692 | 67/33 % AF-V/COH |

The data of Table 1 indicate that as the amount of plasticizer in the adhesive formulation increases, there is a generally parallel increase in peel adhesion. Furthermore, as the amount of plasticizer increases, the nature of the bond failure in the peel adhesion test shifts from a mode that is predominantly one of adhesive failure to the vinyl to one in which the failure mode is predominantly either substrate failure or cohesive failure. As a general rule, adhesive failure to the vinyl substrate is undesirable. It is advantageous to provide sufficient plasticizer so as to shift the nature of the failure from adhesively oriented to either cohesively oriented, substrate oriented, or a mixture of cohesive and substrate failure.

Although the foregoing data suggest that a minimum of 3 parts of plasticizer per 100 parts of adhesive is necessary to achieve such a result, the structure of the polyester polyol component will affect the amount of plasticizer that is needed. For example, as the glass transition temperature of the polyester polyol increases, more plasticizer may be required to achieve the same effect. Similarly, the nature of the

plasticizer itself may determine how much is required. As the molecular weight of the plasticizer decreases, it may be possible to achieve similar performance with less plasticizer. Accordingly, no more than about 2 parts plasticizer per 100 parts adhesive is considered necessary to achieve a useful composition.

**Examples 6 to 12**

Examples 6 to 8 were prepared according to the general preparation and included 31.3 parts MONDUR M (MDI), 19.6 parts RUCOFLEX S-107-210 polyester polyol, 45.7 parts ARCOL E-2306 polyether polyol, 0.017 part TEXACAT DMDEE catalyst, and 0.065 part SILANE A-171 surfactant. The "amount of plasticizer" shown in Table 2 for examples 7 and 8 refers to the number of parts of SANTICIZER C-160 plasticizer that were added to 100 parts of the adhesive formulation of example 6.

Examples 9 to 12 were prepared according to the general preparation and using the adhesive composition of example 1 to which varying amounts (i.e., parts per 100 parts of the adhesive composition of example 1) of two different plasticizers were added, as shown below in Table 2. The isocyanate index for each example was 2.59. The adhesive composition from each example was then tested for viscosity and peel adhesion, the failure mode in the peel adhesion test also being noted. The results are reported below in Table 2.

TABLE 2

| Example | Plasticizer | Amount of Plasticizer | Viscosity (cps) | Peel Adhesion (N/m) | Failure Mode |
|---|---|---|---|---|---|
| 6 | None | 0 | 118,000 | 1610 | 100/ % AF-V |
| 7 | Santicizer C-160 | 5 | 77,000 | 4130 | 9/91 % SF-W/COH |
| 8 | Santicizer C-160 | 10 | 60,000 | 5889 | 100 % COH |
| 9 | Plasthall 325 | 5 | 45,750 | 5758 | 7/93 % SF-W/COH |
| 10 | Plasthall 325 | 10 | 26,500 | 6073 | 45/55 % SF-W/COH |
| 11 | Plasthall 226S | 5 | 60,000 | 5250 | 20/80 % SF-W/COH |
| 12 | Plasthall 226S | 10 | 41,250 | 7508 | 15/85 % SF-W/COH |

The data of Table 2 demonstrate that as the amount of plasticizer increases, the viscosity of the resulting adhesive generally decreases, thereby resulting in improved peel adhesion, presumably due to improved substrate wetting. Also, as the amount of plasticizer increases, the failure mode in the peel adhesion test generally shifts from one of predominantly adhesive failure to the vinyl to one of predominantly either cohesive failure or a mixed substrate/cohesive failure.

**Examples 13 to 19**

Examples 13 to 19 were prepared by adding to 100 parts of the adhesive formulation of example 6, 5 parts of various plasticizers, as shown below in Table 3. Also repeated in Table 3 are examples 6, 7, 9 and 11. Each example was tested for viscosity and peel adhesion with the failure mode in the peel adhesion test being noted as reported below in Table 3.

TABLE 3

| Example | Plasticizer | Viscosity (cps) | Peel Adhesion (N/m) | Failure Mode |
|---|---|---|---|---|
| 6 | None | 118,000 | 1610 | 100 % AF-V |
| 7 | Santicizer C-160 | 77,000 | 4130 | 9/91 % SF-W/COH |
| 9 | Plasthall 325 | 45,750 | 5758 | 7/93 % SF-W/COH |
| 11 | Plasthall 226S | 60,000 | 5250 | 20/80 % SF-W/COH |
| 13 | Plasthall DOP | 72,000 | 4830 | 16/84 % SF-W/COH |
| 14 | Plasthall DIDP | 85,000 | 4830 | 8/92 % SF-W/COH |
| 15 | Plasthall DIDG | 69,000 | 5408 | 9/91 % SF-W/COH |
| 16 | Santicizer C-148 | 68,500 | 4813 | 20/80 % SF-W/COH |
| 17 | Santicizer C-261 | 77,000 | 5198 | 14/86 % SF-W/COH |
| 18 | Dioctyl Adipate | 58,000 | 5373 | 24/76 % SF-W/COH |
| 19 | HB-40 | 86,000 | 4550 | 42/58 % SF-W/COH |

The data of Table 3 illustrate that, as compared to the adhesive composition of example 6, those adhesives which include 5 parts of a plasticizer exhibit reduced viscosity, increased peel adhesion and a failure mode which has shifted from 100% adhesive failure to the vinyl to a mixed substrate/cohesive failure.

**Examples 20 to 23**

Examples 20 to 23 were prepared using the adhesive composition of example 7, except with different polyether polyols, as shown below in Table 4. The relative amount of MONDUR M (MDI) was controlled so as to provide a constant isocyanate index of 2.59 for each example. The adhesive compositions of these examples were then evaluated for viscosity and peel adhesion, the failure mode in the peel adhesion test being noted, as reported below in Table 4.

TABLE 4

| Example | Polyether Polyol | Viscosity (cps) | Peel Adhesion (N/m) | Failure Mode |
|---|---|---|---|---|
| 20 | ARCOL E-2306 | 91,000 | 3070 | 20/80 % SF-W/COH |
| 21 | VORANOL 5815 | 43,000 | 5758 | 27/73 % SF-W/COH |
| 22 | ARCOL E-351 | 27,000 | 5670 | 100 % COH |
| 23 | PLURACOL C-133 | 61,000 | 4894 | 100 % COH |

The data of Table 4 demonstrate that various polyether polyols of varying molecular weight and hydroxyl functionality may be successfully incorporated into the adhesive compositions of the invention. Also, the polyether polyols may include ethylene oxide endcapping. Example 20 was prepared in the same manner as example 7 but demonstrated slightly different viscosity and peel adhesion, thereby showing that even adhesives which are prepared in the same manner may give slightly different results from batch to batch. Slight variations in reported performance may also be attributable to naturally occurring differences in the wood substrate.

**Example 24**

The reaction set up described in the general preparation was used to prepare the adhesive composition of example 24. 31.3 parts of MONDUR M (MDI) were added to the reaction vessel and heated to 60 °C with stirring under a dry nitrogen purge until melted. 19.6 parts of RUCOFLEX S-107-210 polyester polyol, 45.7 parts of ARCOL E-2306 polyether polyol, and 0.017 part TEXACAT DMDEE catalyst were blended until

homogeneous and then added to the stirring, molten MDI over a period of 90 minutes. After the exotherm had subsided, the reaction temperature was raised to 80 °C and held for 3 hours. 3.3 parts of SANTICIZER C-160 plasticizer and 0.065 part of SILANE A-171 surfactant were then added and stirred in until homogeneous. The reaction product was transferred to an epoxy-lined metal can and flushed with dry nitrogen until ready for use. The adhesive composition had an isocyanate index of 2.59. The composition was tested for viscosity, peel adhesion and overlap shear strength with the results reported in Table 5.

The adhesive composition of this example was also evaluated in a vinyl shrinkage test. A bonded composite comprising a piece of conventional, hard vinyl adhesively bonded to an approximately 2.5 cm thick pine substrate was prepared and aged for 7 days under ambient conditions. After aging, the bonded composite was cut to a length of approximately 28 cm and two parallel lines 25.4 cm apart were scribed in the vinyl. The bonded composite was then immersed in 82 °C water for 30 minutes. The bonded composite was removed from the water and the distance between the scribed lines was measured. The vinyl exhibited a shrinkage of 0.25% (approximately 0.64 cm). Unsupported vinyl of the same type typically shows 3% shrinkage under the same conditions.

A vinyl clad wood composite using the adhesive composition of this example was successfully exposed to repeated thermal cycling (125 cycles) from -29 ° to 82 °C without failure.

**Example 25**

The reaction set up described in the general preparation was used to prepare the adhesive composition of example 25. 41.5 parts of MONDUR M (MDI) were added to the reaction vessel and heated to 60 °C with stirring under a dry nitrogen purge until melted. 14.9 parts of RUCOFLEX S-107-210 polyester polyol, 34.8 parts of RUCOFLEX S-107-110 polyester polyol, and 0.009 part of TEXACAT DMDEE catalyst were blended until homogeneous and then added to the stirring molten MDI over a period of 90 minutes. After the exotherm had subsided, the reaction temperature was raised to 80 °C and held for 3 hours. 8.7 parts of SANTICIZER C-160 plasticizer and 0.05 part of SILANE A-171 surfactant were then added and stirred in until homogeneous. The reaction product was transferred to an epoxy-lined metal can and flushed with dry nitrogen until ready for use. The isocyanate index of the adhesive composition was 2.55. The composition was tested for viscosity, peel adhesion and overlap shear strength with the results shown below in Table 5.

The adhesive composition of this example was also evaluated using the vinyl shrinkage test described in conjunction with example 24. The bonded composite demonstrated shrinkage of 0.33%.

**Example 26**

Using the reaction set up described in the general preparation, 276 parts of MONDUR M (MDI) were added to the reaction vessel and heated to 60 °C with stirring under a dry nitrogen purge until melted. 100 parts of RUCOFLEX S-107-210 polyester polyol and 900 parts of ARCOL E-2306 polyether polyol and 0.25 part of TEXACAT DMDEE catalyst were blended until homogeneous and then added to the stirring molten MDI over a period of 15 minutes. After the exotherm had subsided, the reaction temperature was raised to 80 °C and held for 3 hours. The product was then cooled to room temperature and 38.28 parts of SANTICIZER C-160 plasticizer and 0.5 part of SILANE A-171 surfactant were added and stirred in. The isocyanate index was 2.59. The reaction product was transferred to an epoxy-lined metal can and flushed with dry nitrogen until ready for use. The composition was tested for viscosity, peel adhesion and overlap shear strength with the results shown below in Table 5.

**Example 27**

Using the reaction set up described in the general preparation, 54.2 parts of MONDUR M (MDI) were added to the reaction vessel and heated to 60 °C with stirring under a dry nitrogen purge until melted. 20.0 parts of TONE 0201 polyester polyol and 180.0 parts of ARCOL E-2306 polyether polyol and 0.04 part of TEXACAT DMDEE catalyst were blended until homogeneous and then added to the stirring molten MDI over a period of 15 minutes. After the exotherm had subsided, the reaction temperature was raised to 80 °C and held for 3 hours. The product was then cooled to room temperature and 13.0 parts of SANTICIZER C-160 plasticizer and 0.01 part of SILANE A-171 surfactant were added and stirred in. The isocyanate index was 2.59. The reaction product was transferred to an epoxy-lined metal can and flushed with dry nitrogen until ready for use. The composition was tested for viscosity, peel adhesion and overlap shear strength with the results shown below in Table 5.

**Comparative Example 1**

The reaction set up described in the general preparation was used to prepare the adhesive composition of comparative example (C.E.) 1. 179 parts of MONDUR M (MDI) were added to the reaction vessel and heated to 60 °C with stirring under a dry nitrogen purge until melted. 59.5 parts of POLYBD R-45 (a polybutadiene diol having a molecular weight of 2300 from Atochem) were then added with stirring, followed by the slow addition of 208 parts RUCOFLEX S-107-110 polyester polyol over a period of 1 to 6 hours while the temperature was maintained at 60 °C. Then, 89 parts of POLY G 55-28 (an ethylene oxide capped polypropylene oxide diol having a molecular weight of 4000 from Olin Corp.) were added and the temperature was reduced to about 46 °C for 2 to 3 hours. 5.21 parts of diethylmalonate were then dissolved into the fluid system followed by the addition of 0.19 part of dibutyl tin dilaurate catalyst. The resulting adhesive composition was then cooled to room temperature, transferred to an epoxy-lined metal can, and flushed with dry nitrogen until ready for use. The composition of comparative example 1 was tested for viscosity, peel adhesion and overlap shear strength with the results shown in Table 5 below.

TABLE 5

| Example | Viscosity (cps) | Peel Adhesion (N/m) | Failure Mode | Overlap Shear Strength (MPa) | Failure Mode |
|---|---|---|---|---|---|
| 24 | 85,000 | 3829 | 100 % COH | 2.158 | SF-V |
| 25 | 85,500 | 4690 | 25/75 % SF-W/COH | 2.415 | SF-V |
| 26 | 11,250 | 2800 | 100 % COH | 1.692 | 67/33 % SF-V/COH |
| 27 | 47,000 | 4053 | 10/90 % SF-W/COH | 2.097 | SF-V |
| C.E.1 | 158,000 | 3447 | 87/13 % AF-V/COH | 2.249 | 100 % SF- V |

The data of Table 5 illustrate that compared to the plasticizer free composition of comparative example 1, the adhesive compositions of examples 24 to 27 exhibit lower viscosity, superior peel adhesion, and generally better overlap shear strength. Furthermore, in the peel adhesion test, the adhesive compositions of examples 24 to 27 show cohesive failure, substrate failure or a mixture of both, rather than largely adhesive failure to the vinyl as found with comparative example 1.

**Examples 28 to 30**

Example 28 is based on a sample of the adhesive composition of example 25 that had been aged for about one year at room temperature in a sealed metal container. Examples 29 and 30 were prepared by adding to the aged adhesive composition of example 28 an additional 5 parts and 10 parts (per 100 parts of example 25), respectively, of SANTICIZER C-160 plasticizer. The three compositions were then tested for peel adhesion and overlap shear strength, with the failure mode being noted in each case. The results are reported below in Table 6. Also shown in Table 6 is the amount of plasticizer per 100 parts of the adhesive composition not including the plasticizer (i.e., the percent plasticizer based on the aromatic polyisocyanate and the two polyester polyols).

TABLE 6

| Example | Amount of Plasticize r | Peel Adhesion (N/m) | Failure Mode | Overlap Shear Strength (MPa) | Failure Mode |
|---|---|---|---|---|---|
| 28 | 8.7 | 7927 | 33/67 % SF-W/COH | 2.117 | SF-V |
| 29 | 13.7 | 4497 | * | 2.092 | SF-V |
| 30 | 18.7 | 3395 | 100 % COH | 1.464 | SF-V |
| * Mixed failure mode; not readily characterized. | | | | | |

The data of Table 6 show that even after aging for about one year the adhesive compositions of the invention still give good performance. The data of Table 6 further show that up to about 20% plasticizer may be successfully incorporated into the adhesive compositions of the invention and that a polyether polyol is not essential to the adhesive compositions.

Numerous variations and modifications are possible within the scope of the foregoing specification without departing from the spirit of the invention which is defined in the accompanying claims.

**Claims**

**1.** A moisture curable polyurethane adhesive composition comprising:

a) an aromatic polyisocyanate having an isocyanate group functionality that does not exceed about 2.3;

b) a polyester polyol selected from the group consisting of: (1) the reaction product of adipic acid and a diol selected from the group consisting of neopentyl glycol, diethylene glycol, 2-methyl-1,3-propane diol, 2,3-methylbutane diol, 1,2-propylene glycol, and blends thereof; and (2) polycaprolactone diols;

c) a functionally effective amount of a plasticizer; and

(d) optionally, a polyether polyol selected from the group consisting of polyethylene oxide, polypropylene oxide, polybutylene oxide, and copolymers of the foregoing.

**2.** A moisture curable polyurethane adhesive composition according to claim 1 wherein the polyester polyol has a number average molecular weight of about 300 to 2500.

**3.** A moisture curable polyurethane adhesive composition according to claim 2 wherein the polyester polyol has a number average molecular weight of about 500 to 1000.

**4.** A moisture curable polyurethane adhesive composition according to any one of claims 1 to 3 wherein the polyester polyol is selected from the group consisting of neopentyl glycol adipate polyester, ethylene glycol adipate polyester, 2,3-methylbutane diol adipate polyester, polycaprolactone diol, and blends thereof.

**5.** A moisture curable polyurethane adhesive composition according to any one of claims 1 to 4 wherein the polyester polyol has a hydroxyl number of about 110 to 220.

**6.** A moisture curable polyurethane adhesive composition according to any one of claims 1 to 5 wherein the plasticizer is selected from the group consisting of phthalate esters, adipate esters, sebacate esters, glutarate esters, oleate esters, alkyl phosphates, aryl phosphates, and blends thereof.

**7.** A moisture curable polyurethane adhesive composition according to any one of claims 1 to 6 wherein the plasticizer provides from 2 to 20% by weight based on the sum of (a) + (b) + (d).

**8.** A moisture curable polyurethane adhesive composition according to claim 7 wherein the plasticizer provides from 3 to 10% by weight based on the sum of (a) + (b) + (d).

**9.** A moisture curable polyurethane adhesive composition according to any one of claims 1 to 8 wherein the optional polyether polyol is present.

**10.** A bonded composite comprising vinyl adhesively bonded to a wood substrate by the polyurethane adhesive composition of any preceding claim that has been moisture cured.